(19) **Europäisches Patentamt / European Patent Office / Office européen des brevets**

(11) **EP 4 361 210 A1**

(12) # EUROPEAN PATENT APPLICATION
published in accordance with Art. 153(4) EPC

(43) Date of publication:
**01.05.2024 Bulletin 2024/18**

(21) Application number: **22828536.7**

(22) Date of filing: **24.06.2022**

(51) International Patent Classification (IPC):
**C08L 3/02** *(2006.01)*     **C08L 29/04** *(2006.01)*

(52) Cooperative Patent Classification (CPC):
**C08L 3/02; C08L 29/04**

(86) International application number:
**PCT/JP2022/025306**

(87) International publication number:
**WO 2022/270620 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2021   JP 2021104944**

(71) Applicant: **Kuraray Co., Ltd.**
**Kurashiki-shi, Okayama 710-0801 (JP)**

(72) Inventors:
• **AMANO, Yusuke**
  **Kurashiki-shi, Okayama 710-0801 (JP)**
• **TACHIBANA, Yuki**
  **Kurashiki-shi, Okayama 710-0801 (JP)**
• **SAWATANI, Hirotaka**
  **Kurashiki-shi, Okayama 710-0801 (JP)**
• **SATO, Tomohiko**
  **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **RESIN COMPOSITION AND MOLDED BODY**

(57)     The present invention relates to a resin composition containing an anionic group-containing modified vinyl alcohol polymer (A) and a starch (B), in which the starch (B) has an amylopectin content of 50 to 100% by mass.

EP 4 361 210 A1

**Description**

TECHNICAL FIELD

The present invention relates to: a resin composition comprising a starch and a vinyl alcohol polymer, which resin composition has excellent mechanical properties and exhibits a high water solubility; and a molded body formed of the composition.

BACKGROUND ART

Vinyl alcohol polymers are used in a wide range of applications where their excellent coating film properties attributed to high crystallinity (e.g., mechanical strength, oil resistance, film forming properties, and oxygen gas barrier properties) and/or hydrophilicity are utilized, such as binders, packaging materials, sheets, and containers. In the use of a vinyl alcohol polymer, it may be blended with a starch to obtain a resin composition for the purpose of, for example, reducing the total cost of the composition.

As such resin compositions, for example, a resin composition containing a starch modified with a phosphoric acid ester or the like (Patent Document 1), a resin composition containing a starch grafted with a (meth)acrylic acid, and resin compositions that contain an ethylene-acrylic acid copolymer and silk fibroin as additives (Non-patent Documents 1 and 2) are known.

PRIOR ART DOCUMENTS

PATENT DOCUMENTS

Patent Document 1: Chinese Patent Application Publication No. 111440400
Patent Document 2: JP-A H6-73259

NON-PATENT DOCUMENTS

Non-patent Document 1: Effect of starch type on the properties of starch containing films, Carbohydrate Polymers, 1996, vol. 29, p203-208
Non-patent Document 2: Composition optimization of polyvinyl alcohol/rice starch/silk fibroin-blended films for improving its eco-friendly packaging properties, Journal of Applied Polymer Science, vol. 129, p2614-2620

SUMMARY OF THE INVENTION

PROBLEMS TO BE SOLVED BY THE INVENTION

According to the studies conducted by the present inventors, however, it was found that, in such conventionally known resin compositions, the mechanical properties are not sufficient or, although the mechanical properties are exerted, the water solubility markedly deteriorates. Particularly, Patent Documents 1 and 2 do not focus attention on the ratio of amylose and amylopectin that constitute a starch, and the water solubility of the resin compositions disclosed therein is largely reduced in some cases. The resin compositions disclosed in Non-patent Documents 1 and 2 exhibit a low water solubility due to the low water solubility of a vinyl alcohol polymer itself or that of an additive, and these documents disclose the results indicating that the compositions do not completely dissolve in water. Therefore, it was difficult to use these resin compositions in an application where a high water solubility is required.

In view of the above, the present invention is aimed at solving the above-described problems, and an object of the present invention is to provide: a resin composition that has excellent mechanical properties and exhibits a high water solubility; and a molded body of the same.

SOLUTIONS TO THE PROBLEMS

The present inventors conducted detailed studies to solve the above-described problems, thereby completing the present invention. That is, the present invention encompasses the following preferred aspects.

[1] A resin composition, comprising:

an anionic group-containing modified vinyl alcohol polymer (A); and
a starch (B),
wherein the starch (B) has an amylopectin content of 50 to 100% by mass.

[2] The resin composition according to [1], wherein the starch (B) is a modified starch having a substitution degree of higher than 0 but 3 or lower.

[3] The resin composition according to [1] or [2], wherein the modified vinyl alcohol polymer (A) has an anionic group modification amount of 0.1 to 10% by mole.

[4] The resin composition according to any one of [1] to [3], wherein the modified vinyl alcohol polymer (A) has a viscosity-average polymerization degree of 300 to 3,000.

[5] The resin composition according to any one of [1] to [4], wherein a mass ratio (A/B) of the modified vinyl alcohol polymer (A) and the starch (B) is 15/85 to 70/30.

[6] The resin composition according to any one of [1] to [5], having a haze of 30% or less.

[7] The resin composition according to any one of [1] to [6], wherein the starch (B) is a modified starch having a substitution degree of 0.05 to 0.5.

[8] The resin composition according to any one of [1] to [7], wherein the mass ratio (A/B) of the modified vinyl alcohol polymer (A) and the starch (B) is 30/70 to 70/30.

[9] A molded body, comprising the resin composition according to any one of [1] to [8].

[10] The molded body according to [9], which is a film or a fiber.

[11] The molded body according to [10], which is a water-soluble film or a water-soluble fiber.

EFFECTS OF THE INVENTION

According to the present invention, a resin composition that has excellent mechanical properties and exhibits a high water solubility, and a molded body of the same can be provided.

DETAILED DESCRIPTION

Embodiments of the present invention will now be described in detail. It is noted here, however, that the scope of the present invention is not limited to the embodiments described below, and various modifications can be made without departing from the gist of the present invention.

[Resin Composition]

The resin composition of the present invention comprises: an anionic group-containing modified vinyl alcohol polymer (A); and a starch (B).

(Modified Vinyl Alcohol Polymer (A))

The resin composition of the present invention contains an anionic group-containing modified vinyl alcohol polymer (A). By incorporating the anionic group-containing modified vinyl alcohol polymer (A), the hydrophilicity and the water solubility of the resin composition are likely to be improved. Examples of the anionic group include a carboxyl group, a sulfonate group, a phosphate group, and salts of these groups. From the standpoint of improving the water solubility of the resin composition, the anionic group is preferably one selected from the group consisting of a carboxyl group, a sulfonate group, and salts thereof. A carboxyl group and salts thereof are particularly preferred.

A method of introducing the anionic group to the modified vinyl alcohol polymer (A) of the present invention is not particularly limited, and examples thereof include: a method of allowing a vinyl alcohol polymer and an anionic group-containing compound to react with each other; and a method of copolymerizing a vinyl ester monomer and an anionic group-containing monomer and saponifying the resultant. The anionic group-containing monomer is not particularly limited, and any of the following monomers can be preferably used: maleic acid and salts thereof, and maleic acid esters such as monomethyl maleate, dimethyl maleate, monoethyl maleate, and diethyl maleate; itaconic acid and salts thereof, and itaconic acid esters such as monomethyl itaconate, dimethyl itaconate, monoethyl itaconate, and diethyl itaconate; fumaric acid and salts thereof, and fumaric acid esters such as monomethyl fumarate, dimethyl fumarate, monoethyl fumarate, and diethyl fumarate; maleic anhydride, itaconic anhydride, and derivatives thereof; acrylic acid and salts thereof, and acrylic acid esters such as methyl acrylate, ethyl acrylate, n-propyl acrylate, and isopropyl acrylate; methacrylic acid and salts thereof, and methacrylic acid esters such as methyl methacrylate, ethyl methacrylate, n-propyl methacrylate, and isopropyl methacrylate; allyl sulfonic acid and salts thereof; vinylsulfonic acid and salts thereof; ethylenesulfonic acid and salts thereof; 2-acrylamide-2-methyl propanesulfonic acid and salts thereof; and 2-methylacrylamide-2-methyl propanesulfonic acid and salts thereof. Thereamong, from the standpoint of the water solubility of a molded body of the resin composition, maleic acid, monomethyl maleate, dimethyl maleate, itaconic acid, monomethyl itaconate, dimethyl itaconate, acrylic acid, methyl acrylate, methacrylic acid, and methyl methacrylate are preferred. These carboxyl group-containing monomers may be used singly, or in combination of two or more thereof.

Examples of the above-described vinyl ester monomer include vinyl formate, vinyl acetate, vinyl propionate, vinyl valerate, vinyl caprate vinyl laurate, vinyl stearate, vinyl benzoate, vinyl pivalate, and vinyl versatate, among which vinyl acetate is particularly preferred.

From the standpoint of improving the water solubility of the resin composition and its molded body, the anionic group modification amount in the modified vinyl alcohol polymer (A) is preferably not less than 0.1% by mole, more preferably not less than 0.5% by mole, still more preferably not less than 1.0% by mole, yet still more preferably not less than 1.5% by mole, particularly preferably 2.0% by mole, particularly more preferably not less than 2.5% by mole. Further, from the standpoint of improving the mechanical properties of a molded body obtained from the resin composition, the anionic group modification amount is preferably 10% by mole or less, more preferably 7% by mole or less, still more preferably 6% by mole or less. The anionic group modification amount can be determined by measuring $^1$H-NMR of the modified vinyl alcohol polymer and calculating the modification amount (% by mole) in accordance with, for example, the method described in JP-A 2000-309607.

From the standpoint of improving the mechanical properties of a molded body obtained from the resin composition, the viscosity-average polymerization degree of the modified vinyl alcohol polymer (A) is preferably not less than 300, more preferably not less than 400, still more preferably not less than 500. Further, from the standpoint of the water solubility, the viscosity-average polymerization degree is preferably 3,000 or less, more preferably 2,500 or less, still more preferably 2,000 or less. The viscosity-average polymerization degree of the modified vinyl alcohol polymer (A) can be measured in accordance with JIS K6726-1994.

From the standpoint of improving the mechanical properties and the water solubility of a molded body obtained from the resin composition, the saponification degree of the modified vinyl alcohol polymer (A) is preferably 60 to 100% by mole, more preferably 70 to 99.9% by mole, still more preferably 80 to 99.7% by mole. A lower limit of the saponification degree of the modified vinyl alcohol polymer (A) may be, for example, not less than 85% by mole, not less than 90% by mole, or not less than 95% by mole. The saponification degree of a vinyl alcohol polymer can be measured in accordance with JIS K6726-1994.

(Starch)

The resin composition of the present invention contains the anionic group-containing modified vinyl alcohol polymer (A) and a starch (B), and the starch (B) has an amylopectin content of 50 to 100% by mass. When the amylopectin content of the starch is less than 50% by mass, not only the water solubility of the resin composition is hardly improved, but also the moldability deteriorates. From the standpoint of improving the water solubility and the mechanical properties of the resin composition and its molded body, the amylopectin content of the starch is preferably not less than 60% by mass, more preferably not less than 70% by mass, still more preferably not less than 75% by mass, yet still more preferably more than 75% by mass, particularly preferably not less than 80% by mass, particularly more preferably not less than 81% by mass, extremely preferably not less than 82% by mass. An upper limit of the amylopectin content may be 100% by mass or less. The term "amylopectin content" used herein means a mass ratio of amylopectin when a total mass of amylose and amylopectin that are contained in the starch is taken as 100% by mass. The amylopectin content can be determined by, for example, a colorimetric measurement method using an iodine reactant, or a quantification method using concanavalin A as described in Carbohydrate Research, Vol. 180, 301-313, or Starch/Starke, Vol. 42, 302-305.

The starch contained in the resin composition of the present invention is not particularly limited as long as it has an amylopectin content of 50% by mass or more, and examples thereof include corn starch, potato starch, wheat starch, rice starch, tapioca starch, sweet potato starch, sago palm starch, soybean starch, arrowroot starch, bracken starch, lotus starch, cassava starch, waxy corn starch, high-amylose corn starch, commercially available amylose powders, and modification products thereof. Examples of a modified starch include cationic starch, pregelatinized starch, etherified starch, acetylated starch, modified amylose corn starch, esterified high-amylose corn starch, and hydrophobized waxy starch. It is noted here that the above-exemplified starches do not mean that, for example, a corn starch has an amylopectin content of 50% by mass or more. As the starch, for example, any of the starches that are commercially available as corn starch and have an amylopectin content of 50% by mass or more, or are adjusted to have an amylopectin content of 50% by mass or more, can be used. From the standpoint of workability, the starch is preferably selected from the group consisting of corn starch, rice starch, tapioca starch, and waxy corn starch, more preferably selected from the group consisting of corn starch, tapioca starch, and waxy corn starch.

The resin composition of the present invention may contain a single kind of starch, or may contain two or more kinds of starches. When the resin composition of the present invention contains a single kind of starch, the amylopectin content of the starch may be 50% by mass or more. When the resin composition of the present invention contains two or more kinds of starches, the amylopectin content of the starches contained in the resin composition of the present invention as a whole may be 50% by mass or more. In the latter case, the weighted average of the amylopectin content of each of the two or more kinds of starches contained in the resin composition may be adopted as the amylopectin content of the starches as a whole, or the amylopectin content measured for a mixture of the two or more kinds of starches may be adopted as the amylopectin content of the starches as a whole. In the case of determining the amylopectin content of the starches as a whole based on weighted average, it can be calculated from the amylopectin content of each starch using the following equation:

$$\text{Amylopectin content (\% by mass) of starches as a whole} = \Sigma(n_a i \times M_a i)/100$$

$n_a i$: Amylopectin content (% by mass) of each starch
$M_a i$: Ratio (% by mass) of each starch in all starches

From the standpoint of improving the water solubility and the mechanical properties of the resin composition and its molded body, the starch contained in the resin composition of the present invention is preferably a modified starch having a modifying group. Examples of the modifying group include hydroxyalkyl groups having 1 to 10 carbon atoms (preferably a hydroxypropyl group), alkyl ester groups having 1 to 15 carbon atoms, a carboxymethyl group, and a phosphate group. When the starch has a modifying group, the crystallinity is reduced and the post-molding recrystallization is moderately inhibited as well; therefore, the water solubility and the mechanical properties of the resin composition and its molded body are likely to be improved. Accordingly, in a preferred aspect of the present invention, the starch contained in the resin composition is preferably a hydroxyalkylated starch having a hydroxyalkyl group having 1 to 5 carbon atoms, or a starch having a carboxymethyl group, more preferably a hydroxyethylated starch, a hydroxypropylated starch, or a starch having a carboxymethyl group, still more preferably a hydroxypropylated starch.

In an aspect in which the resin composition of the present invention is used as a water-soluble film, from the standpoint of improving the water solubility and the mechanical properties of the film, the starch is preferably a hydroxyalkylated starch having a hydroxyalkyl group having 1 to 5 carbon atoms, or a starch having a carboxymethyl group, more preferably a hydroxyethylated starch, a hydroxypropylated starch, or a starch having a carboxymethyl group, still more preferably a hydroxypropylated starch.

In an aspect in which the resin composition of the present invention is used as a water-soluble fiber, from the standpoint of improving the moldability and the mechanical properties of the fiber, the starch is preferably a hydroxyalkylated starch having a hydroxyalkyl group having 1 to 5 carbon atoms, or an alkyl esterified starch having an alkyl ester group having 1 to 15 carbon atoms, more preferably a hydroxyethylated starch, a hydroxypropylated starch, or an alkyl esterified starch having an alkyl ester group having 1 to 5 carbon atoms, still more preferably a hydroxypropylated starch.

When the starch contained in the resin composition of the present invention has a modifying group, the substitution degree in the starch is preferably 0.05 to 0.5. From the standpoint of improving the water solubility and the mechanical properties of the resin composition and its molded body, the substitution degree is preferably not less than 0.05, more preferably not less than 0.1, still more preferably not less than 0.15, but preferably 0.5 or less, more preferably 0.4 or less, still more preferably 0.3 or less. The substitution degree in the starch can be measured by, for example, the method described below in the section of Examples.

From the standpoint of biodegradability, the starch contained in the resin composition of the present invention is preferably not a grafted starch that is grafted with a monomer such as (meth)acrylic acid, particularly an acrylic monomer. In the starch contained in the resin composition of the present invention, the ratio of a grafted starch is preferably 0.7% by mass or less, more preferably 0.5% by mass or less, still more preferably 0.2% by mass or less, yet still more preferably 0.1% by mass or less, based on a total amount of the starch.

Further, from the standpoint of mechanical properties, the starch contained in the resin composition of the present invention is preferably not an oxidized starch. In the starch contained in the resin composition of the present invention, the ratio of an oxidized starch is preferably 0.7% by mass or less, more preferably 0.5% by mass or less, still more preferably 0.2% by mass or less, yet still more preferably 0.1% by mass or less, based on a total amount of the starch.

The resin composition of the present invention contains the anionic group-containing modified vinyl alcohol polymer (A) and the starch (B), and a mass ratio (A/B) of the modified vinyl alcohol polymer (A) and the starch (B) is preferably 15/85 to 70/30, more preferably 15/85 to 65/35, still more preferably 20/80 to 60/40. When the mass ratio (A/B) is in the above-described range, an excellent balance of water solubility and mechanical properties is obtained, which is preferred. Further, from the standpoint of improving the biomass ratio of raw materials, the higher the ratio of the starch (B) with respect to the modified vinyl alcohol polymer (A), the more preferred it is. The biomass ratio of raw materials can be increased by, for example, using a modified vinyl alcohol polymer produced from biomass-derived vinyl acetate as the modified vinyl alcohol polymer (A). The mass ratio (A/B) of the modified vinyl alcohol polymer (A) and the starch (B) may be calculated from the mixing ratio of raw materials used in the production of the resin composition, or may be calculated by, for example, fractionating and analyzing the resin composition constituting a molded body such as a film by liquid chromatography or the like. The mass ratio (A/B) of the modified vinyl alcohol polymer (A) and the starch (B) may be, for example, 30/70 to 70/30, 35/65 to 65/35, or 40/60 to 60/40.

A total mass of the starch and the vinyl alcohol polymer that are contained in the resin composition of the present invention may be set as appropriate in accordance with the intended use of a molded body obtained from the resin composition of the present invention and the properties desired for the molded body; however, from the standpoint of improving the water solubility and the mechanical properties of the resin composition and the molded body, the total mass of the starch and the vinyl alcohol polymer is preferably not less than 60% by mass, more preferably not less than 70% by mass, still more preferably not less than 80% by mass, yet still more preferably not less than 85% by mass, particularly preferably not less than 90% by mass, based on a total mass of the resin composition of the present invention.

By using the resin composition of the present invention, a highly transparent molded body, such as a film or a fiber, can be produced. For example, when the molded body is a film, there is an advantage that the visibility of contents therein is likely to be improved. From this standpoint, the haze of the resin composition of the present invention is preferably 30% or less, more preferably 20% or less, still more preferably 15% or less, yet still more preferably 10% or less. The haze of the resin composition can be measured by, for example, molding the resin composition into a film form, and the haze is preferably measured in the form of a film having a thickness of about 50 $\mu$m. Examples of a method of molding the resin composition into the form of a film having a thickness of 50 $\mu$m include a method of obtaining a film by applying and then drying an aqueous solution, which is obtained by dissolving the resin composition of the present invention in an appropriate solvent (preferably water), onto a resin film (e.g., a polyethylene terephthalate film) serving as a substrate.

(Plasticizer)

In addition to the above-described starch and vinyl alcohol polymer, the resin composition of the present invention may also contain a plasticizer within a range that does not impair the effects of the present invention. The type and the amount of the plasticizer optionally contained in the resin composition of the present invention can be determined in view of the intended use and the moldability of a molded body formed of the composition. Examples of the plasticizer include, but not particularly limited to: polyhydric alcohols, such as glycerol, diglycerol, diethylene glycol, triethylene glycol, propylene glycol, dipropylene glycol, trimethylolpropane, pentaerythritol, 1,3-butanediol, sorbitol, fructose, and xylitol; polyethers, such as polyethylene glycol and polypropylene glycol; polyvinylamides such as polyvinylpyrrolidone; amide compounds, such as N-methylpyrrolidone and dimethylacetamide; compounds obtained by addition of ethylene oxide to a polyhydric alcohol such as glycerol, pentaerythritol, or sorbitol; and water. These plasticizers may be used singly, or in combination of two or more thereof. Among these plasticizers, glycerol, diglycerol, diethylene glycol, triethylene glycol, propylene glycol, dipropylene glycol, trimethylolpropane, sorbitol, polyethylene glycol, or polyvinylpyrrolidone is preferably used for the purpose of improving the water solubility and, especially from the standpoint of the effect of inhibiting a reduction in the water solubility of a film caused by bleed-out of the plasticizer, it is particularly preferred to use glycerol, diglycerol, trimethylolpropane, sorbitol, polyethylene glycol, or polyvinylpyrrolidone. When the resin composition of the present invention contains a plasticizer, the content of the plasticizer is preferably 40% by mass or less, more preferably 30% by mass or less, still more preferably 20% by mass or less, yet still more preferably 15% by mass or less, particularly preferably 10% by mass or less, with respect to a total mass of the starch, the vinyl alcohol polymer, and the plasticizer.

(Surfactant)

In addition to the above-described starch and vinyl alcohol polymer, the resin composition of the present invention can contain a surfactant as required within a range that does not impair the effects of the present invention. The type of the surfactant is not particularly limited; however, an anionic or nonionic surfactant is preferred. Preferred examples of the anionic surfactant include: carboxylic acid-type anionic surfactants, such as potassium laurate; sulfate-type anionic surfactants, such as octyl sulfate; and sulfonic acid-type anionic surfactants, such as dodecylbenzenesulfonate. Preferred examples of the nonionic surfactant include: alkyl ether-type nonionic surfactants, such as polyoxyethylene lauryl ether and polyoxyethylene oleyl ether; alkyl phenyl ether-type nonionic surfactants, such as polyoxyethylene octyl phenyl ether; alkyl ester-type nonionic surfactants, such as polyoxyethylene laurate; alkylamine-type nonionic surfactants, such as polyoxyethylene lauryl amino ether; alkylamide-type nonionic surfactants, such as polyoxyethylene lauric acid amide; polypropylene glycol ether-type nonionic surfactants, such as polyoxyethylene polyoxypropylene ether;

alkanolamide-type nonionic surfactants, such as oleic acid diethanolamide; and allyl phenyl ether-type nonionic surfactants, such as polyoxyalkylene allyl phenyl ether. These surfactants may be used singly, or in combination of two or more thereof. When the resin composition of the present invention contains a surfactant, the content of the surfactant is preferably 5% by mass or less, more preferably 2% by mass or less, still more preferably 1% by mass or less, with respect to a total mass of the starch, the vinyl alcohol polymer, and the plasticizer.

(Inorganic Filler)

In addition to the above-described starch and vinyl alcohol polymer, the resin composition of the present invention can further contain an inorganic filler as required for the purpose of, for example, inhibiting blocking, within a range that does not impair the effects of the present invention. Examples of the inorganic filler include: silica; heavy, light, or surface-treated calcium carbonate; aluminum hydroxide; aluminum oxide; titanium oxide; diatomaceous earth; barium sulfate; calcium sulfate; zeolite; zinc oxide; silicic acid; silicate; mica; magnesium carbonate; clays, such as kaolin, halloysite, pyrophyllite, and sericite; and talc. These inorganic fillers may be used singly, or in combination of two or more thereof. When the resin composition of the present invention contains an inorganic filler, the content of the inorganic filler may vary depending on the purpose of addition; however, it is, for example, preferably 20% by mass or less, more preferably 15% by mass or less, still more preferably 10% by mass or less, with respect to a total mass of the starch, the vinyl alcohol polymer, and the plasticizer.

(Other Components)

In addition to the above-described starch and vinyl alcohol polymer as well as the plasticizer, the surfactant, and the inorganic filler that are optionally incorporated, the resin composition of the present invention may also contain other components within a range that does not impair the effects of the present invention. Examples of the optional other components include: polymers other than the vinyl alcohol polymer and the starch; and various additives such as crosslinking agents, antioxidants, stabilizers, lubricants, processing aids, antistatic agents, colorants, impact resistance aids, and foaming agents. When the resin composition of the present invention contains the above-described resin components and various additives, the content thereof is preferably 20% by mass or less, more preferably 15% by mass or less, still more preferably 10% by mass or less, with respect to a total mass of the starch and the vinyl alcohol polymer.

[Molded Body]

A molded body having excellent mechanical properties and high water solubility can be obtained using the resin composition of the present invention. The present invention also provides a molded body containing the resin composition of the present invention. The shape of the molded body containing the resin composition of the present invention is not particularly limited, and the molded body can be molded in various forms, examples of which include films, fibers, laminates, and paper coating materials. The molded body is preferably a film or a fiber, and may be, for example, a water-soluble film or a water-soluble fiber. A method of producing a molded body using the resin composition of the present invention is not particularly limited, and a variety of conventionally known production methods can be employed to produce a molded body by processing the resin composition of the present invention.

In the molded body containing the resin composition of the present invention, from the standpoint of improving the mechanical properties and the water solubility of the molded body through utilization of the mechanical properties and the water solubility of the resin composition, the content of the resin composition of the present invention is preferably not less than 50% by mass, more preferably not less than 60% by mass, still more preferably not less than 70% by mass, yet still more preferably not less than 80% by mass, particularly preferably not less than 90% by mass, based on the mass of the molded body. Further, an upper limit of the content is 100% by mass or less. The molded body of the present invention may be a molded body consisting of the resin composition of the present invention.

In a preferred aspect of the present invention, when the molded body of the present invention is a film, the film can be produced by any film-forming method that is generally employed for film production, such as a flow-casting film-forming method, a wet film-forming method, a dry film-forming method, an extrusion film-forming method, a melt film-forming method, a coating method, a casting method, or an inflation film-forming method. Particularly, the molded body can be produced by a production method that includes at least, for example, the following steps:

(1) the resin solution preparation step of obtaining a resin solution that contains a starch, a polyvinyl alcohol polymer, a solvent and, as required, a plasticizer and other component(s);
(2) the coating film forming step of applying the resin solution onto a substrate and subsequently removing the solvent to obtain a coating film; and
(3) the peeling step of peeling the coating film from the substrate as required. The resin composition of the present invention is a composition formed of solid components contained in the above-described resin solution.

In the resin solution preparation step (1), a resin solution is prepared by mixing a starch, a polyvinyl alcohol polymer, a solvent and, as required, a plasticizer and the like. Examples of the solvent include water, dimethyl sulfoxide (DMSO), glycerol, ethylene glycol, and mixed solvents thereof. From the standpoint of the solubility of the polymer and the removability of the solvent, it is preferred to use water as the solvent. In a preferred embodiment, a resin solution is preferably prepared by dissolving the starch, the polyvinyl alcohol polymer, the solvent and, as required, the plasticizer using a batch-type dissolution tank and/or an extruder. The temperature of the dissolution tank is preferably about 60 to 150°C.

In the coating film forming step (2), a coating film is obtained by applying the resin solution onto a substrate and subsequently removing the solvent. The above-described casting surface may be made of any material that is smooth and hard, such as steel, aluminum, glass, or a polymer (e.g., a polyolefin, a polyethylene, a polyamide, a polyvinyl chloride, a polycarbonate, or a polyhalocarbon). The evaporation rate of an aqueous solvent can be increased by heating the casting surface or exposing a solution deposited thereon to, for example, a heated air or infrared rays. The casting surface may be flat, and can be obtained by preparing a film using a standard (drum-type) industrial casting machine for film production and subsequently drying the film in an oven. The heating temperature may be any temperature as long as the solvent can be removed and is not particularly limited; however, it is preferably 50 to 200°C, more preferably 60 to 150°C. The solvent may be removed by using a hot air, or by heating under a vacuum condition.

The peeling step (3) may be performed as required, and a film containing the resin composition of the present invention can be obtained by peeling a dry film from the substrate.

In another preferred aspect of the present invention, when the molded body of the present invention is a fiber, the molded body can be produced by a production method that includes at least, for example, the following steps:

(1) the spinning dope preparation step of obtaining a spinning dope that contains a starch, a polyvinyl alcohol polymer, a solvent and, as required, a plasticizer and other component(s);
(2) the undrawn fiber forming step of extruding the spinning dope into dry air and subsequently removing the solvent to form an undrawn fiber; and
(3) the drawing step of drawing the undrawn fiber.

In the spinning dope preparation step (1), a spinning dope is prepared by mixing a starch, a polyvinyl alcohol polymer, the solvent described above in relation to the resin solution and, as required, a plasticizer and the like. From the standpoint of the solubility of the polymer and the removability of the solvent, it is preferred to use water as the solvent. In a preferred embodiment, a spinning dope is preferably prepared by dissolving the starch, the polyvinyl alcohol polymer, the solvent and, as required, the plasticizer using a batch-type dissolution tank and/or an extruder. The temperature of the dissolution tank is preferably about 100 to 150°C.

In the undrawn fiber forming step (2), an undrawn fiber is formed by a dry spinning method from the spinning dope obtained in the step (1). One example of the dry spinning method is a method of forming a fiber by extruding the spinning dope into heated dry air through a nozzle and subsequently removing the solvent by evaporation. The thus dried fiber may be wound up using a winding device or the like. The number of pores of the nozzle is not particularly limited, and it is, for example, 10 to 1,000. The temperature of the dry air is also not particularly limited as long as the solvent can be removed, and it is preferably 50 to 200°C, more preferably 60 to 150°C.

In the drawing step (3), the undrawn fiber obtained in the step (2) is drawn. From the standpoint of improving the mechanical performance of the fiber, the draw ratio is preferably not less than 1.1, more preferably not less than 3.0, still more preferably not less than 3.5, yet still more preferably not less than 4.0, particularly preferably not less than 4.5, particularly more preferably not less than 5.0. The drawing temperature is preferably 100°C or higher, more preferably 110°C or higher, still more preferably 120°C or higher, but preferably 200°C or lower, more preferably 190°C or lower, still more preferably 180°C or lower. Further, the drawing time is preferably 5 seconds or longer, more preferably 10 seconds or longer, but preferably 60 seconds or shorter, more preferably 40 seconds or shorter. The drawing can be performed by any commonly used method and, for example, the drawing may be performed in a hot air furnace.

A molded body formed of the resin composition of the present invention not only exhibits excellent mechanical properties but also has a high water solubility; therefore, it can be used as a variety of molded bodies. For example, when the molded body of the present invention is a film, the film can be used as a packaging material, particularly a packaging material or the like in which a chemical (e.g., a detergent, an agricultural chemical, or a fungicide) is to be enclosed. When the molded body is a fiber, the fiber can be used as a variety of fiber structures. For example, the fiber can be processed into a fiber structure such as a cut fiber, a filament, a spun yarn, a fabric (e.g., a woven or knitted fabric, a dry nonwoven fabric, or a wet nonwoven fabric), a rope, or a string.

When the molded body of the present invention is a film, the film preferably further has a high transparency. Such a highly transparent film is advantageous in that it is likely to improve the visibility of contents therein. In this case, the haze of the film of the present invention is preferably 30% or less, more preferably 20% or less, still more preferably 15% or less, yet still more preferably 10% or less. When the molded body of the present invention is a film, the thickness thereof may be determined as appropriate in accordance with the intended use and is not particularly limited; however, in the case of using the film in an application where transparency is required, the thickness thereof may be, for example, preferably 1 mm or less, more preferably 500 $\mu$m or less, still more preferably 100 $\mu$m or less, yet still more preferably 80 $\mu$m or less. Further, from the standpoint of improving the strength, the thickness may be, for example, 1 $\mu$m or more, preferably 10 $\mu$m or more.

Further, the molded body containing the resin composition of the present invention can be preferably used in, for example, the following applications:

filters for air, oil, and water; vacuum cleaner filters; furnace filters; face masks; coffee filters, and tea or coffee bags; thermal insulation materials and sound insulation materials; disposable sanitary products, such as diapers, feminine pads, and incontinence products; biodegradable textile fabrics for improvement of moisture absorption and flexibility of clothes, such as ultrafine fibers and breathable fabrics; electrostatically-charged structured webs for dust collection and removal; reinforcing materials; webs for hard paper, such as wrapping paper, writing paper, newsprint paper, and corrugated paper boards; webs for thin paper, such as toilet paper, paper towels, napkins, and tissue paper; medical applications, such as surgical drapes, wound dressings, bandages, dermal patches, and self-dissolving sutures; dental applications, such as dental floss and toothbrush bristles; agricultural applications, such as houses, tunnels, and weed control sheets; fishery applications, such as fishing lines, fishing strings, fishing baits, and fishing nets; and packaging applications, such as plastic bags, packing materials, food trays, and bags.

Moreover, for example, an odor absorbent, a termite repellant, an insecticide, or a rodenticide may be added to the molded body containing the resin composition of the present invention. The resulting molded body absorbs water and oils, and thus can be used for water and oil spill clean-up, or controlled water retention and release for agriculture or horticulture.

The resin composition of the present invention may be incorporated into other materials, such as saw dust, wood pulp, plastics, and concrete, to obtain composite materials that are used as building materials, such as walls, support beams, press boards, dry walls, backers, and ceiling tiles. The resin composition of the present invention may also be incorporated into materials that are used in other medical applications, such as casts, splints, and tongue depressors, as well as fireplace logs for decorative and/or burning purposes.

EXAMPLES

The present invention will now be described in more detail by way of Examples; however, the present invention is not limited by the below-described Examples by any means. In the below-described Examples and Comparative Examples, unless otherwise specified, "%" and "parts" represent "% by mass" and "parts by mass", respectively.

[Modification Amount]

Using a nuclear magnetic resonance apparatus "LAMBDA 500" manufactured by JEOL Ltd., $^1$H-NMR of each modified vinyl alcohol polymer was measured at room temperature in a DMSO-$d_6$ solvent, and the anionic group modification amount (% by mole) was calculated in accordance with the method described in, for example, JP-A-2000-309607.

[Viscosity-Average Polymerization Degree and Saponification Degree]

The viscosity-average polymerization degree and the saponification degree of each modified vinyl alcohol polymer were determined by the methods prescribed in JIS K6726 (1994).

[Substitution Degree]

<Hydroxypropyl Modification>

Using a nuclear magnetic resonance apparatus "LAMBDA 500" manufactured by JEOL Ltd., $^1$H-NMR of each starch was measured at room temperature in a DMSO$d_6$ solvent, and the substitution degree was calculated from a ratio between the peak area of modifying moiety that appears at 1.04 ppm and the peak area of glucose unit that appears at 5.13 ppm ((peak area of modifying moiety at 1.04 ppm/3)/peak area of glucose unit).

<Butyric Acid Modification>

Using a nuclear magnetic resonance apparatus "LAMBDA 500" manufactured by JEOL Ltd., $^1$H-NMR of each

starch was measured at 70°C in a DMSO-$d_6$ solvent, and the substitution degree (X) was calculated using the following equation (1) which is satisfied when the peak area of modifying moiety that appears at 0.90 ppm, the peak area of glucose unit that appears at 3.20 ppm to 5.70 ppm, and the area per $^1$H in the glucose unit are denoted as (A), (B), and (C), respectively:

$$C \times (9 - X) = B, C \times X = A/3 \qquad (1)$$

<Carboxymethylstarch>

Using a nuclear magnetic resonance apparatus "LAMBDA 500" manufactured by JEOL Ltd., $^1$H-NMR of each starch was measured at 70°C in a $D_2O$ solvent, and the substitution degree (X) was calculated using the following equation (2) which is satisfied when the peak area of glucose unit that appears at 5.70 ppm to 6.20 ppm, and the area of an overlapping peak of glucose unit and modifying moiety that appears at 3.80 ppm to 4.65 ppm are denoted as (A) and (B), respectively:

$$X = ((B/A) - 6)/2 \qquad (2)$$

[Measurement of Film Haze]

For each of the films produced in Examples and Comparative Examples, the haze (%) of a portion having a thickness of 50 $\mu$m was measured in accordance with JIS K7105 using a haze meter "NDH-5000" manufactured by Nippon Denshoku Industries Co., Ltd.

[Method of Evaluating Film Water Solubility]

The films produced in Examples and Comparative Examples were each cut into a 30 mm × 40 mm rectangular piece and inserted into a slide mount. Separately, a 600-mL glass beaker containing 500 mL of distilled water was placed in a thermostat bath adjusted at 20°C, and the distilled water was stirred at 400 rpm using a 5-cm rotor. After the temperature of the distilled water in the beaker reached 20°C, the slide mount was immersed in the water being stirred to start the measurement of water solubility.

In this process, the dissolved state of the film was visually observed, and the time (seconds) required for the film to be completely dissolved was measured to evaluate the water solubility based on the below-described evaluation criteria. It is noted here that, when a film whose thickness was not 50 $\mu$m was used, the measured value was converted into a value corresponding to a film thickness of 50 $\mu$m using the following equation. The below-described four-level evaluation criteria of A to D indicate that the closer to A, the superior is the water solubility.

Converted complete dissolution time (sec) = [50/Film thickness ($\mu$m)]$^2$ × Sample complete dissolution time (sec)

<Evaluation Criteria of Water Solubility>

    A: 50 seconds or shorter
    B: 51 seconds to 100 seconds
    C: 101 seconds to 200 seconds
    D: longer than 200 seconds

[Film Tensile Strength]

The films produced in Examples and Comparative Examples were stored for 7 days in an environment having a temperature of 23°C and a humidity of 40%RH, and subsequently each cut out into five test pieces of 10 mm in width and 120 mm in length. For each of the thus obtained test pieces, the maximum stress and the elongation at break were measured using an AUTOGRAPH (apparatus name: AG-5000B, manufactured by Shimadzu Corporation) at a chuck distance of 70 mm and a tensile rate of 500 mm/min, and average values thereof were determined. The thus determined maximum stress and elongation at break were evaluated based on the following evaluation criteria. The following four-level evaluation criteria of A to D indicate that the closer to A, the superior is the respective property.

<Evaluation Criteria of Maximum Stress>

A: 23 MPa or more
B: 19 MPa or more but less than 23 MPa
C: 15 MPa or more but less than 19 MPa
D: less than 15 MPa

<Evaluation Criteria of Elongation at Break>

A: 250% or more
B: 200% or more but less than 250%
C: 100% or more but less than 200%
D: less than 100%

[Synthesis Example 1]

To a reactor equipped with a reflux condenser, a stirrer, a thermometer, a nitrogen introduction tube, a post-addition liquid inlet, and a pump, 640 parts by mass of vinyl acetate, 293 parts by mass of methanol, and 0.31 parts by mass of methyl acrylate were added. After purging the system with nitrogen while stirring the resulting polymerization solution, the polymerization solution was heated and, once the temperature thereof reached 60°C, 0.1 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 10%-by-mass methanol solution of methyl acrylate. After 90 parts by mass of the 10%-by-mass methanol solution of methyl acrylate was added dropwise in a substantially uniform manner over a period of 220 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 286 parts by mass of the thus obtained methanol solution of PVAc that was adjusted to have a concentration of 35% by mass with an addition of methanol thereto, 28 parts by mass of an alkali solution (12%-by-mass methanol solution of NaOH) and 19 parts by mass of methanol were added, and saponification was performed at 40°C for 1 hour. In this process, a gelled material generated after the addition of the alkali solution was pulverized using a pulverizer and returned back to the reactor. Thereafter, the resultant was further stirred at 65°C for 1 hour to perform a saponification reaction for a total of 2 hours, after which residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-1" containing a carboxyl group as an anionic group was obtained.

[Synthesis Example 2]

To a reactor equipped with a reflux condenser, a stirrer, a thermometer, a nitrogen introduction tube, an inlet for post-addition liquid, and a pump, 640 parts by mass of vinyl acetate, 541 parts by mass of methanol, and 0.27 parts by mass of methyl acrylate were added. After purging the system with nitrogen while stirring the resulting polymerization solution, the polymerization solution was heated and, once the temperature thereof reached 60°C, 0.1 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 10%-by-mass methanol solution of methyl acrylate. After 79 parts by mass of the 10%-by-mass methanol solution of methyl acrylate was added dropwise in a substantially uniform manner over a period of 250 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 286 parts by mass of the thus obtained methanol solution of PVAc that was adjusted to have a concentration of 35% by mass with an addition of methanol thereto, 27 parts by mass of an alkali solution (12%-by-mass methanol solution of NaOH) and 21 parts by mass of methanol were added, and saponification was performed at 40°C for 1 hour. In this process, a gelled material generated after the addition of the alkali solution was pulverized using a pulverizer and returned back to the reactor. Thereafter, the resultant was further stirred at 65°C for 1 hour to perform a saponification reaction for a total of 2 hours, after which residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-2" containing a carboxyl group as an anionic group was obtained.

[Synthesis Example 3]

To a reactor equipped with a reflux condenser, a stirrer, a thermometer, a nitrogen introduction tube, an inlet for post-addition liquid, and a pump, 640 parts by mass of vinyl acetate, 80 parts by mass of methanol, and 0.39 parts by mass of methyl acrylate were added. After purging the system with nitrogen while stirring the resulting polymerization solution, the polymerization solution was heated and, once the temperature thereof reached 60°C, 0.1 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 10%-by-mass methanol solution of methyl acrylate. After 110 parts by mass of the 10%-by-mass methanol solution of methyl acrylate was added dropwise in a substantially uniform manner over a period of 200 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 333 parts by mass of the thus obtained methanol solution of PVAc that was adjusted to have a concentration of 30% by mass with an addition of methanol thereto, 32 parts by mass of an alkali solution (12%-by-mass methanol solution of NaOH) and 134 parts by mass of methanol were added, and saponification was performed at 40°C for 1 hour. In this process, a gelled material generated after the addition of the alkali solution was pulverized using a pulverizer and returned back to the reactor. Thereafter, the resultant was further stirred at 65°C for 1 hour to perform a saponification reaction for a total of 2 hours, after which residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-3" containing a carboxyl group as an anionic group was obtained.

[Synthesis Example 4]

To a reactor equipped with a reflux condenser, a stirrer, a thermometer, a nitrogen introduction tube, an inlet for post-addition liquid, and a pump, 640 parts by mass of vinyl acetate, 3,234 parts by mass of methanol, and 0.2 parts by mass of methyl acrylate were added. After purging the system with nitrogen while stirring the resulting polymerization solution, the polymerization solution was heated and, once the temperature thereof reached 60°C, 0.5 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 10%-by-mass methanol solution of methyl acrylate. After 78 parts by mass of the 10%-by-mass methanol solution of methyl acrylate was added dropwise in a substantially uniform manner over a period of 290 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 222 parts by mass of the thus obtained methanol solution of PVAc that was adjusted by concentration to have a concentration of 45% by mass, 23 parts by mass of an alkali solution (12%-by-mass methanol solution of NaOH) and 5 parts by mass of methanol were added, and saponification was performed at 40°C for 1 hour. Thereafter, the resultant was further stirred at 65°C for 1 hour to perform a saponification reaction for a total of 2 hours, after which residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-4" containing a carboxyl group as an anionic group was obtained.

[Synthesis Example 5]

To a reactor equipped with a reflux condenser, a stirrer, a thermometer, a nitrogen introduction tube, an inlet for post-addition liquid, and a pump, 640 parts by mass of vinyl acetate, 290 parts by mass of methanol, and 1.9 parts by mass of monomethyl maleate were added. After purging the system with nitrogen while stirring the resulting polymerization solution, the polymerization solution was heated and, once the temperature thereof reached 60°C, 0.1 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 5%-by-mass methanol solution of monomethyl maleate. After 91 parts by mass of the 5%-by-mass methanol solution of monomethyl maleate was added dropwise in a substantially uniform manner over a period of 220 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 286 parts by mass of the thus obtained methanol solution of PVAc that was adjusted to have a concentration of 35% by mass with an addition of methanol thereto, 18 parts by mass of an alkali solution (12%-by-mass methanol solution of NaOH) and 96 parts by mass of methanol were added, and saponification was performed at 40°C. In this process, a gelled material generated after the addition of the alkali solution was pulverized using a pulverizer and returned back to the reactor. Thereafter, the resultant was further stirred at 65°C for 1 hour to perform a saponification reaction for a total of 2 hours, after which residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-5" containing a carboxyl group as an anionic group was obtained.

[Synthesis Example 6]

To a reactor equipped with a reflux condenser, a stirrer, a thermometer, a nitrogen introduction tube, an inlet for post-addition liquid, and a pump, 640 parts by mass of vinyl acetate, 272 parts by mass of methanol, and 1.9 parts by mass of sodium 2-acrylamide-2-propanesulfonate were added. After purging the system with nitrogen while stirring the resulting polymerization solution, the polymerization solution was heated and, once the temperature thereof reached 60°C, 0.1 parts by mass of 2,2'-azobis(isobutyronitrile) (AIBN) was added to initiate polymerization. While analyzing the solid concentration of the polymerization system from the initiation of the polymerization, the polymerization was allowed to proceed with dropwise addition of a 5%-by-mass methanol solution of sodium 2-acrylamide-2-propanesulfonate. After 218.6 parts by mass of the 5%-by-mass methanol solution of sodium 2-acrylamide-2-propanesulfonate was added dropwise in a substantially uniform manner over a period of 230 minutes after the initiation of the polymerization, the system was cooled to room temperature to terminate the polymerization. Subsequently, unreacted vinyl acetate monomers were removed under reduced pressure to prepare a methanol solution of a polyvinyl acetate (PVAc). To 286 parts by mass of the thus obtained methanol solution of PVAc that was adjusted to have a concentration of 35% by mass with an addition of methanol thereto, 9.7 parts by mass of an alkali solution (12%-by-mass methanol solution of NaOH) and 105 parts by mass of methanol were added, and saponification was performed at 40°C. In this process, a gelled material generated after the addition of the alkali solution was pulverized using a pulverizer and returned back to the reactor. After performing a saponification reaction for a total of 1 hour, residual alkali was neutralized with an addition of 200 parts by mass of methyl acetate. After the completion of this neutralization was confirmed using a phenolphthalein indicator, a white solid product obtained by filtration was left to stand in 1,000 parts by mass of methanol added thereto at room temperature for 3 hours and thereby washed. This washing operation was repeated three times, and a product obtained by subsequent centrifugal dehydration was dried in a dryer at 40°C under a pressure of 1.3 Pa for 20 hours, whereby a modified vinyl alcohol polymer "PVOH-6" containing a sulfonate group as an anionic group was obtained.

[Synthesis Example 7]

In a reactor equipped with a stirrer, 12.7 parts by mass of phosphonoacetic acid and 40 parts by mass of water were added and stirred at room temperature to completely dissolve phosphonoacetic acid, and 160 parts by mass of a 25%-by-mass aqueous solution of a polyvinyl alcohol (saponification degree = 98.5% by mole, viscosity-average polymerization degree = 1,700; manufactured by Kuraray Co., Ltd.) was further added, followed by stirring. The thus obtained mixture was transferred to a petri dish and heat-treated on a hot plate at 100°C. After 60 minutes, the petri dish was cooled at room temperature, and the resulting resin solid was collected, whereby a modified vinyl alcohol polymer "PVOH-7" was obtained.

[Synthesis Example 8]

A silica spherical carrier was impregnated with an aqueous solution in an amount equivalent to the water absorption amount of the carrier, which aqueous solution contained an aqueous sodium tetrachloropalladate solution and an aqueous tetrachloroaurate tetrahydrate solution, and this silica spherical carrier was immersed in an aqueous solution containing sodium metasilicate nonahydrate and left to stand. Subsequently, an aqueous hydrazine hydrate solution was added, and the resultant was left to stand at room temperature and then washed with water until the washing water contained no chloride ion, followed by drying. The resulting palladium-gold-carrier composition was immersed in an aqueous acetic acid solution and left to stand, after which the composition was washed with water and then dried. Thereafter, the resultant was impregnated with an aqueous potassium acetate solution in an amount equivalent to the water absorption amount of the carrier and then dried, whereby a vinyl acetate synthetic catalyst was obtained.

[Synthesis Example 9]

The catalyst obtained in Synthesis Example 8 was diluted with glass beads and filled into an SUS reaction tube, and a mixed gas of ethylene, oxygen, water, acetic acid, and nitrogen was circulated in the reaction tube to perform a reaction. As the ethylene, a bioethylene (manufactured by Braskem S.A.) derived from sugarcane that is a C4 plant was used. As the acetic acid, a bio-acetic acid derived from sugarcane that is a C4 plant was vaporized and then introduced to the reaction system in a vapor form. The thus obtained vinyl acetate is hereinafter referred to as "VAM-1".

[Synthesis Example 10]

A modified vinyl alcohol polymer "PVOH-8" was obtained in the same manner as in Synthesis Example 1, except that, as the vinyl acetate, "VAM-1" derived from a biological raw material, which is described above in Synthesis Example 9, was used.

[Synthesis Example 11]

To a reactor equipped with a reflux condenser, a stirrer, a thermometer, a nitrogen introduction tube, and a particle addition port, 100 parts by mass of corn starch having an amylopectin content of 83%, 2,500 parts by mass of 2-propyl alcohol, 45 parts by mass of monochloroacetic acid were added. While stirring these materials at room temperature, 110 parts of a 10%-by-mass aqueous sodium hydroxide solution was added, and the reactor was heated until its internal temperature reached 55°C, and the materials were stirred in this state for 5 hours to perform carboxymethylation. The reactor was cooled to room temperature, and the resulting reaction product was separated by filtration, after which 1,000 parts by mass of methanol was added to this product, followed by stirring at room temperature for 3 hours to wash the product. This washing operation was repeated three times, and the thus obtained starch was vacuum-dried overnight at 40°C, whereby a carboxymethylated starch "starch-9" having a substitution degree of 0.5 was obtained.

[Synthesis Example 12]

To a reactor equipped with a reflux condenser, a stirrer, a thermometer, a nitrogen introduction tube, and a particle addition port, 100 parts by mass of the above-described starch-10 and 1,000 parts by mass of water were added. The reactor was heated until its internal temperature reached 50°C, and the added materials were stirred in this state for 30 minutes to dissolve the starch, followed by cooling to room temperature. To the resulting solution, 170 parts by mass of monochloroacetic acid was added, and 50 parts by mass of a 20%-by-mass aqueous sodium hydroxide solution was further added dropwise with stirring at room temperature, after which the reactor was heated until its internal temperature reached 55°C, and the resultant was stirred for 3 hours to perform carboxymethylation. Subsequently, the resulting reaction solution was cooled to normal temperature and added dropwise to 3,000 parts by mass of ethanol to perform reprecipitation, and the thus obtained product was separated by filtration. Thereafter, 1,000 parts by mass of methanol was added to this product, followed by stirring at room temperature for 3 hours to wash the product. This washing operation was repeated three times, and the thus obtained starch was vacuum-dried overnight at 40°C, whereby a carboxymethylated starch "starch-10" having a substitution degree of 1.2 was obtained.

[Synthesis Example 13]

To a reactor equipped with a reflux condenser, a stirrer, a thermometer, a nitrogen introduction tube, and a particle addition port, 100 parts by mass of corn starch having an amylopectin content of 83% and 1,000 parts by mass of dimethyl sulfoxide were added. The reactor was heated until its internal temperature reached 70°C, and the added materials were stirred in this state for 30 minutes to dissolve the corn starch, followed by cooling to normal temperature. To the resulting solution, 35 parts by mass of sodium bicarbonate was added, and 80 parts by mass of vinyl butyrate was subsequently added dropwise while stirring the solution, after which the reactor was heated until its internal temperature reached 90°C, and the resultant was continuously heated with stirring for 3 hours to perform alkyl group modification by transesterification. Then, the resulting reaction solution was cooled to normal temperature and added dropwise to 3,000 parts by mass of water to perform reprecipitation, and the thus obtained product was separated by filtration. Thereafter, 1,000 parts by mass of water was added to this product, followed by stirring at room temperature for 3 hours to wash the product. This washing operation was repeated three times, and the thus obtained starch was vacuum-dried overnight at 40°C, whereby a butyrated starch "starch-11" having a substitution degree of 0.3 was obtained.

[Synthesis Example 14]

An electron beam (30 kGy) was irradiated to 100 parts by mass of corn starch having an amylose content of 70%. Next, 100 parts by mass of acrylic acid, 500 parts by mass of methanol, and 400 parts by mass of water were added to an autoclave equipped with a stirrer, a nitrogen introduction tube, and a particle addition port, and an operation of filling nitrogen into the system and decompressing the system was repeated five times to purge the system with nitrogen. To this autoclave, 100 parts by mass of the corn starch irradiated with the electron beam was added, and the autoclave was heated until its internal temperature reached 50°C with the nitrogen atmosphere being maintained, and the added materials were continuously heated with stirring in this state for 4 hours to perform graft polymerization. Subsequently, the autoclave was cooled to normal temperature, and the resulting reacted starch was separated by filtration. Thereafter, an operation of washing this starch with methanol was repeated 10 times. The thus obtained starch was vacuum-dried overnight at 40°C, whereby an acrylic acid-grafted starch having a graft ratio of 15% was obtained.

[Example 1]

As a modified vinyl alcohol polymer (A), PVOH-1 obtained in Synthesis Example 1 was added to water, and the resultant was heated with stirring at 95°C for 2 hours to obtain an aqueous solution having a concentration of 8%. To this aqueous solution, a 1N aqueous sodium hydroxide solution was added such that the amount of NaOH was molar equivalent to the anionic groups of the modified vinyl alcohol polymer (A). Further, as a starch (B), a hydroxypropyl group-modified starch-1 having an amylopectin content of 83% by mass (substitution degree = 0.2) was added to water, and the resultant was heated with stirring at 95°C for 2 hours to perform gelatinization, whereby an aqueous solution having a concentration of 5% was obtained. The thus obtained aqueous solution of the modified vinyl alcohol polymer (A) and an aqueous solution of the starch (B) were mixed such that the vinyl alcohol polymer and the starch had the solid mass ratio shown in Table 2 under "(A)/(B)". To the resulting mixture, glycerol was added as a plasticizer (C) in an amount of 20% by mass with respect to a total mass of (A) and (B) to prepare a coating liquid. The thus obtained coating liquid was applied onto a polyethylene terephthalate film using a bar coater and then dried with hot air at 80°C for 1 hour, after which the thus obtained dry coating film was peeled off from the polyethylene terephthalate film substrate, whereby a film having a thickness of about 50 µm was obtained.

[Examples 2 to 4]

A molded body was obtained in the same manner as in Example 1, except that the mixing ratio of the aqueous solution of the vinyl alcohol polymer (A) and the aqueous solution of the starch (B) was changed to the respective mass ratios shown in Table 2 as "(A)/(B)", and that the amount of the added plasticizer (C) was changed to 30% by mass with respect to a total mass of (A) and (B).

[Example 5]

A molded body was obtained in the same manner as in Example 1, except that a hydroxypropyl group-modified starch-2 having an amylopectin content of 99% by mass (substitution degree = 0.2) was used as the starch (B) in place of the starch-1, and that the amount of the added plasticizer (C) was changed to 30% by mass with respect to a total mass of (A) and (B).

[Example 6]

A molded body was obtained in the same manner as in Example 1, except that an unmodified starch-3 having an amylopectin content of 83% by mass was used as the starch (B) in place of the starch-1, and that the amount of the added plasticizer (C) was changed to 30% by mass with respect to a total mass of (A) and (B).

[Example 7]

A molded body was obtained in the same manner as in Example 1, except that PVOH-2 was used as the modified vinyl alcohol polymer (A) in place of PVOH-1, and that the amount of the added plasticizer (C) was changed to 30% by mass with respect to a total mass of (A) and (B).

[Example 8]

A molded body was obtained in the same manner as in Example 1, except that PVOH-3 was used as the modified vinyl alcohol polymer (A) in place of PVOH-1, and that the amount of the added plasticizer (C) was changed to 30% by mass with respect to a total mass of (A) and (B).

[Example 9]

A molded body was obtained in the same manner as in Example 1, except that PVOH-4 was used as the modified vinyl alcohol polymer (A) in place of PVOH-1, and that the mixing ratio of the vinyl alcohol polymer (A) and the starch (B) was changed as shown in Table 2 as "(A)/(B)".

[Example 10]

A molded body was obtained in the same manner as in Example 1, except that PVOH-5 was used as the modified vinyl alcohol polymer (A) in place of PVOH-1, and that the amount of the added plasticizer (C) was changed to 30% by mass with respect to a total mass of (A) and (B).

[Example 11]

A target molded body was obtained in the same manner as in Example 1, except that PVOH-6 was used as the modified vinyl alcohol polymer (A) in place of PVOH-1, that the amount of the added plasticizer (C) was changed to 30% by mass with respect to a total mass of (A) and (B), and that the 1N aqueous sodium hydroxide solution was not added.

[Example 12]

A target molded body was obtained in the same manner as in Example 1, except that PVOH-7 was used as the modified vinyl alcohol polymer (A) in place of PVOH-1, and that the amount of the added plasticizer (C) was changed to 30% by mass with respect to a total mass of (A) and (B).

[Example 13]

A starch-6 (amylopectin content = equivalent to 52% by mass) was obtained by mixing 42 parts of the hydroxypropyl group-modified starch-1 having an amylopectin content of 83% by mass (substitution degree = 0.2) and 58 parts of a hydroxypropyl group-modified starch-4 having an amylopectin content of 30% by mass (substitution degree = 0.2). A molded body was obtained in the same manner as in Example 1, except that this starch-6 was used as the starch (B) in place of the starch-1, and that the amount of the added plasticizer (C) was changed to 30% by mass with respect to a total mass of (A) and (B).

[Example 14]

A starch-7 (amylopectin content = equivalent to 72% by mass) was obtained by mixing 80 parts of the hydroxypropyl group-modified starch-1 having an amylopectin content of 83% by mass (substitution degree = 0.2) and 20 parts of the hydroxypropyl group-modified starch-4 having an amylopectin content of 30% by mass (substitution degree = 0.2). A molded body was obtained in the same manner as in Example 1, except that this starch-7 was used as the starch (B) in place of the starch-1, and that the amount of the added plasticizer (C) was changed to 30% by mass with respect to a total mass of (A) and (B).

[Example 15]

A molded body was obtained in the same manner as in Example 1, except that a hydroxypropyl group-modified starch-8 having an amylopectin content of 83% by mass (substitution degree = 0.1) was used as the starch (B) in place of the starch-1, and that the amount of the added plasticizer (C) was changed to 30% by mass with respect to a total mass of (A) and (B).

[Example 16]

A molded body was obtained in the same manner as in Example 1, except that sorbitol was used as the plasticizer (C) in place of glycerol, and that the amount of the added plasticizer (C) was changed as shown in Table 3.

[Examples 17 and 18]

A molded body was obtained in the same manner as in Example 1, except that sorbitol was used as the plasticizer (C) in place of glycerol, and that the mixing ratio of the vinyl alcohol polymer (A) and the starch (B) as well as the amount of the added plasticizer (C) were changed as shown in Table 3.

[Example 19]

A molded body was obtained in the same manner as in Example 1, except that fructose was used as the plasticizer (C) in place of glycerol, and that the amount of the added plasticizer (C) was changed as shown in Table 3.

[Example 20]

A molded body was obtained in the same manner as in Example 1, except that xylitol was used as the plasticizer (C) in place of glycerol, and that the amount of the added plasticizer (C) was changed as shown in Table 3.

[Example 21]

A molded body was obtained in the same manner as in Example 1, except that the starch-9 was used as the starch (B) in place of the starch-1, and that the amount of the added plasticizer (C) was changed as shown in Table 3.

[Example 22]

A molded body was obtained in the same manner as in Example 1, except that the starch-10 was used as the starch (B) in place of the starch-1, and that the amount of the added plasticizer (C) was changed as shown in Table 3.

[Example 23]

A molded body was obtained in the same manner as in Example 1, except that the starch-11 was used as the starch (B) in place of the starch-1, and that the mixing ratio of the vinyl alcohol polymer (A) and the starch (B) as well as the amount of the added plasticizer (C) were changed as shown in Table 3.

[Example 24]

A target molded body was obtained in the same manner as in Example 1, except that PVOH-8 was used as the modified vinyl alcohol polymer (A) in place of PVOH-1, and that the amount of the added plasticizer (C) was changed as shown in Table 3.
A molded body was obtained in the same manner as in Example 1, except that the starch-11 was used as the starch (B) in place of the starch-1.

[Example 25]

A target molded body was obtained in the same manner as in Example 1, except that PVOH-8 was used as the modified vinyl alcohol polymer (A) in place of PVOH-1, and that sorbitol was added as the plasticizer (C) in place of glycerol in the amount shown in Table 3.

[Comparative Example 1]

A target molded body was obtained in the same manner as in Example 1, except that a commercially available polyvinyl alcohol resin (viscosity-average polymerization degree = 1,700, saponification degree = 98.5% by mole) was used as the vinyl alcohol polymer (A) in place of PVOH-1.

[Comparative Example 2]

A molded body was obtained in the same manner as in Example 1, except that the hydroxypropyl group-modified starch-4 having an amylopectin content of 30% by mass (substitution degree = 0.2) was used as the starch (B) in place of the starch-1.

[Comparative Example 3]

A target molded body was obtained in the same manner as in Example 1, except that the acrylic acid-grafted starch-5 obtained in Synthesis Example 13 was used as the starch (B) in place of the starch-1.

For each of the modified vinyl alcohol polymers "PVOH-1" to "PVOH-8" obtained in the above-described Synthesis Examples, the anionic group modification amount, the viscosity-average polymerization degree, and the saponification degree were measured in accordance with the above-described respective methods. The thus obtained results are shown in Table 1.

[Table 1]

| Modified vinyl alcohol polymer (A) | Anionic group | | Viscosity-average polymerization degree | Saponificatio n degree |
|---|---|---|---|---|
| | Type | Modification amount [% by mole] | | |
| PVOH-1 | Carboxyl group | 4.5 | 1,500 | 99.6 |
| PVOH-2 | Carboxyl group | 4.0 | 1,000 | 99.7 |
| PVOH-3 | Carboxyl group | 5.5 | 2,500 | 99.5 |
| PVOH-4 | Carboxyl group | 3.0 | 200 | 99.9 |
| PVOH-5 | Carboxyl group | 1.7 | 1,500 | 99.8 |
| PVOH-6 | Sulfonate group | 2.2 | 1,400 | 95.1 |

The molded bodies obtained in Examples and Comparative Examples were each evaluated in accordance with the above-described evaluation methods. The results thereof are shown in Tables 2 and 3.

[Table 2]

| | | Resin composition | | | | | | | Evaluation results | | | |
|---|---|---|---|---|---|---|---|---|---|---|---|---|
| | | Modified vinyl alcohol polymer (A) | Starch (B) | | | (A/B) | Plasticizer Type | (C) amount [% by mass] | Water solubility [sec] | Maximum stress [MPa] | Elongation at break [%] | Haze |
| | | | Type | Amylopectin content [% by mass] | Substitution degree | | | | | | | |
| Exam ples | 1 | PVOH-1 | Starch 1 | 83 | 0.2 | 50/50 | Glycerol | 20 | A | A | A | 6.7 |
| | 2 | PVOH-1 | Starch 1 | 83 | 0.2 | 40/60 | Glycerol | 30 | A | B | B | 8.9 |
| | 3 | PVOH-1 | Starch 1 | 83 | 0.2 | 35/65 | Glycerol | 30 | B | B | C | 12.1 |
| | 4 | PVOH-1 | Starch 1 | 83 | 0.2 | 25/75 | Glycerol | 30 | B | G | C | 13.5 |
| | 5 | PVOH-1 | Starch 2 | 99 | 0.2 | 50/50 | Glycerol | 30 | A | C | B | 7.0 |
| | 6 | PVOH-1 | Starch 3 | 83 | 0 | 50/50 | Glycerol | 30 | C | C | C | 19.9 |
| | 7 | PVOH-2 | Starch 1 | 83 | 0.2 | 50/50 | Glycerol | 30 | A | A | A | 6.2 |
| | 8 | PVOH-3 | Starch 1 | 83 | 0.2 | 50/50 | Glycerol | 30 | C | A | A | 7.8 |
| | 9 | PVOH-4 | Starch 1 | 83 | 0.2 | 60/40 | Glycerol | 20 | A | C | C | 5.3 |
| | 10 | PVOH-5 | Starch 1 | 83 | 0.2 | 50/50 | Glycerol | 30 | B | B | A | 7.0 |
| | 11 | PVOH-6 | Starch 1 | 83 | 0.2 | 50/50 | Glycerol | 30 | B | B | B | 8.1 |
| Comp arativ e Exam pies | 1 | Unmodified PVOH | Starch 1 | 83 | 0.2 | 50/50 | Glycerol | 30 | D | A | A | 1.1 |
| | 2 | PVOH-1 | Starch 4 | 30 | 0.2 | 40/60 | Glycerol | 30 | D | C | B | 34.3 |
| | 3 | PVOH-1 | Starch 5 | 30 | (Graft ratio 15%) | 35/65 | Glycerol | 30 | D | D | C | 41.2 |

[Table 3]

| | | Resin composition | | | | | Plasticizer (C) | | Evaluation results | | | |
|---|---|---|---|---|---|---|---|---|---|---|---|---|
| | | Modified vinyl alcohol polymer (A) | Starch (B) | | | (A/B) | | | | | | |
| | | | Type | Amylopectin content [% by mass] | Substitution degree | | Type | Added amount [% by mass] | Water solubility [sec] | Maximum stress [MPa] | Elongation at break [%] | Haze [%] |
| Examples | 12 | PVOH-7 | Starch 1 | 83 | 0.2 | *50/50* | Glycerol | 30 | B | B | B | 8.3 |
| | 13 | PVOH-1 | Starch 6 | 52 | 0.2 | 50/50 | Glycerol | 30 | C | B | B | 21.0 |
| | 14 | PVOH-1 | Starch 7 | 72 | 0.2 | 50/50 | Glycerol | 30 | B | B | A | 11.3 |
| | 15 | PVOH-1 | Starch 8 | 83 | 0.1 | 50/50 | Glycerol | 30 | C | A | A | 18.8 |
| | 16 | PVOH-1 | Starch 1 | 83 | 0.2 | 50/50 | Sorbitol | 30 | A | A | A | 5.5 |
| | 17 | PVOH-1 | Starch 1 | 83 | 0.2 | 35/65 | Sorbitol | 30 | A | A | a | 6.0 |
| | is | PVOH-1 | Starch 1 | 83 | 0.2 | 20/80 | Sorbitol | 30 | B | B | C | 6.3 |
| | 19 | PVOH-1 | Starch 1 | 83 | 0.2 | 50/50 | Fructose | 30 | B | A | B | 7.4 |
| | 20 | PVOH-1 | Starch 1 | 83 | 0.2 | 50/50 | Xylitol | 30 | B | A | B | 7.2 |
| | 21 | PVOH-1 | Starch 9 | 83 | 0.5 | 50/50 | Glycerol | 30 | B | B | B | 9.1 |
| | 22 | PVOH-1 | Starch 10 | 83 | 1.2 | 50/50 | Glycerol | 30 | B | C | B | 9.1 |
| | 23 | PVOH-1 | Starch 11 | 83 | 0.3 | 80/20 | Glycerol | 30 | C | A | B | 17.2 |
| | 24 | PVOH-8 | Starch 1 | 83 | 0.2 | 50/50 | Glycerol | 30 | A | A | A | 6.7 |
| | 25 | PVOH-8 | Starch 1 | 83 | 0.2 | 50/50 | Sorbitol | 30 | A | A | A | 5.5 |

As shown in Tables 2 and 3, all of the films produced in Examples 1 to 25 exhibited a high water solubility and excellent mechanical properties. As shown in Comparative Example 1, the use of an unmodified vinyl alcohol polymer results in a large reduction in the water solubility. As in the case of Comparative Example 2, when a starch having a high amylose ratio is used, since the molecular chains cannot be sufficiently dissociated in the gelatinization step due to strong molecular interactions, the water solubility is largely reduced. As in the case of Comparative Example 3, when a starch that is modified with an anionic group but has a high amylose ratio is used, it is believed that a uniform molded body cannot be obtained since the molecular chains cannot be sufficiently dissociated in the gelatinization step due to strong molecular interactions, as a result of which the mechanical properties are deteriorated. In addition, due to strong molecular interactions between polyacrylic acid molecules introduced as graft chains, the water solubility is largely reduced once the resin composition is molded.

[Example 26]

The film (resin composition) obtained in Example 1 was added to DMSO such that the amount of the resin composition was 23% by mass, and the film was dissolved with stirring at 90°C for 5 hours to obtain a spinning dope. This spinning dope was passed through a nozzle having 80 pores of 0.1 mmφ in size, and dry-wet spun in a 5°C solidification bath using a mixture of methanol and DMSO as a solidifying liquid, followed by 3.0-fold wet-heat drawing in a 20°C methanol bath. It is noted here that the mixing ratio of methanol and DMSO in the solidifying liquid was 80:20 in terms of volume ratio. Subsequently, DMSO in the resulting fiber sliver was extracted with methanol, and a spinning oil was applied to the fiber sliver, which was then dried at 120°C. The thus obtained dry yarn was dry-heat drawn at a temperature of 160°C and a dry-heat draw ratio of 2.0, whereby a fiber molded body was obtained. The thus obtained fiber had a high water solubility in the same manner as the film obtained in Example 1. In addition, the thus obtained fiber had sufficient mechanical properties.

[Example 27]

A fiber was obtained in the same manner as in Example 26, except that a film produced without an addition of glycerol as the plasticizer (C) in Example 1 was used in place of the film obtained in Example 1.
The thus obtained fiber had a high water solubility in the same manner as the film obtained in Example 1. In addition, the thus obtained fiber had sufficient mechanical properties.

[Example 28]

A fiber was obtained in the same manner as in Example 26, except that a film produced using the starch-11 as the starch (B) in place of the starch-1 in Example 1 was used in place of the film obtained in Example 1. The thus obtained fiber had a high water solubility in the same manner as the film obtained in Example 1. In addition, the thus obtained fiber had sufficient mechanical properties.

**Claims**

1. A resin composition, comprising:

   an anionic group-containing modified vinyl alcohol polymer (A); and
   a starch (B)
   wherein the starch (B) has an amylopectin content of 50 to 100% by mass.

2. The resin composition according to claim 1, wherein the starch (B) is a modified starch having a substitution degree of higher than 0 but 3 or lower.

3. The resin composition according to claim 1 or 2, wherein the modified vinyl alcohol polymer (A) has an anionic group modification amount of 0.1 to 10% by mole.

4. The resin composition according to any one of claims 1 to 3, wherein the modified vinyl alcohol polymer (A) has a viscosity-average polymerization degree of 300 to 3,000.

5. The resin composition according to any one of claims 1 to 4, wherein a mass ratio (A/B) of the modified vinyl alcohol polymer (A) and the starch (B) is 15/85 to 70/30.

6. The resin composition according to any one of claims 1 to 5, having a haze of 30% or less.

7. The resin composition according to any one of claims 1 to 6, wherein the starch (B) is a modified starch having a substitution degree of 0.05 to 0.5.

8. The resin composition according to any one of claims 1 to 7, wherein the mass ratio (A/B) of the modified vinyl alcohol polymer (A) and the starch (B) is 30/70 to 70/30.

9. A molded body, comprising the resin composition according to any one of claims 1 to 8.

10. The molded body according to claim 9, which is a film or a fiber.

11. The molded body according to claim 10, which is a water-soluble film or a water-soluble fiber.

## INTERNATIONAL SEARCH REPORT

International application No.

**PCT/JP2022/025306**

### A. CLASSIFICATION OF SUBJECT MATTER

*C08L 3/02*(2006.01)i; *C08L 29/04*(2006.01)i
FI:   C08L3/02; C08L29/04 B

According to International Patent Classification (IPC) or to both national classification and IPC

### B. FIELDS SEARCHED

Minimum documentation searched (classification system followed by classification symbols)

C08L3/02; C08L29/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-106854 A (KURARAY CO LTD) 17 April 2001 (2001-04-17)<br>    table 1, examples 1-9, comparative examples 1, 3, 5, 7-8, etc. | 1, 3-6, 8-11 |
| X | CN 111484694 A (FOSHAN POLYVA MATERIALS CO., LTD.) 04 August 2020 (2020-08-04)<br>    example 2, etc. | 1, 3-4, 6, 9-11 |
| X | WO 2008/126635 A1 (NIPPON PAPER INDUSTRIES CO., LTD.) 23 October 2008 (2008-10-23)<br>    paragraphs [0011], [0041], [0043]-[0044], etc. | 1, 3-6, 8-11 |
| X | JP 2001-164470 A (KURARAY CO LTD) 19 June 2001 (2001-06-19)<br>    example 4, etc. | 1, 4, 6, 9-11 |
| P, X | JP 2021-102824 A (KURARAY CO LTD) 15 July 2021 (2021-07-15)<br>    example 3, etc. | 1, 3-6, 8-11 |
| A | JP 2021-511449 A (THE PROCTER & GAMBLE COMPANY) 06 May 2021 (2021-05-06)<br>    paragraph [0121], etc. | 1-11 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## EP 4 361 210 A1

**INTERNATIONAL SEARCH REPORT**
Information on patent family members

International application No.

**PCT/JP2022/025306**

| Patent document cited in search report | | | Publication date (day/month/year) | Patent family member(s) | Publication date (day/month/year) |
|---|---|---|---|---|---|
| JP | 2001-106854 | A | 17 April 2001 | (Family: none) | |
| CN | 111484694 | A | 04 August 2020 | (Family: none) | |
| WO | 2008/126635 | A1 | 23 October 2008 | US 2010/0062935 A1 paragraphs [0032], [0077]-[0078], etc. EP 2130681 A2 CN 101652253 A | |
| JP | 2001-164470 | A | 19 June 2001 | (Family: none) | |
| JP | 2021-102824 | A | 15 July 2021 | (Family: none) | |
| JP | 2021-511449 | A | 06 May 2021 | US 2019/0233970 A1 paragraph [0133], etc. EP 3743548 A1 CN 111511967 A | |

Form PCT/ISA/210 (patent family annex) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111440400
- JP H673259 A
- JP 2000309607 A

**Non-patent literature cited in the description**

- Effect of starch type on the properties of starch containing films. *Carbohydrate Polymers,* 1996, vol. 29, 203-208
- Composition optimization of polyvinyl alcohol/rice starch/silk fibroin-blended films for improving its eco-friendly packaging properties. *Journal of Applied Polymer Science,* vol. 129, 2614-2620
- *Carbohydrate Research,* vol. 180, 301-313
- *Starch/Starke,* vol. 42, 302-305